# EUROPEAN PATENT SPECIFICATION

(11) **EP 2 338 749 B1**
(45) Date of publication and mention of the grant of the patent: **13.03.2013**
(21) Application number: 08877536.6
(22) Date of filing: 21.10.2008
(51) Int. Cl.: B60T 8/17, B61H 13/06, B60T 13/66, B60T 17/22

(54) **RAILCAR BRAKE CONTROL DEVICE**
SCHIENENFAHRZEUGBREMSSTEUERVORRICHTUNG
DISPOSITIF DE COMMANDE DE FREIN D'AUTORAIL

(43) Date of publication of application: 29.06.2011
(73) Proprietor: Mitsubishi Electric Corporation, Tokyo 100-8310 (JP)
(72) Inventor: MATSUYAMA, Etsuji, Tokyo 100-8310 (JP); ITANO, Yasuharu, Tokyo 100-8310 (JP)
(74) Representative: Zech, Stefan Markus
(86) International application number: PCT/JP2008/069050
(87) International publication number: WO 2010/046970

(56) References cited:
- JP-A- 9 123 890
- JP-A- 57 000 933
- JP-A- 2001 138 882
- JP-A- 2003 063 366
- JP-A- 2003 063 366
- JP-A- 2006 203 969
- JP-A- 2006 203 969
- JP-T- 2006 527 688

## Description

### TECHNICAL FIELD

The present invention relates to a rail vehicle brake control device.

### BACKGROUND ART

A rail vehicle brake control device (hereinafter, "brake control device") that controls a brake cylinder pressure acting on a brake cylinder of each axle is utilized in rail vehicles. The brake control device includes a brake control unit that generates a pressure control signal for controlling a brake cylinder pressure based on a service brake command and an emergency brake command; an electromagnetic valve unit that includes a brake control valve that adjusts a pressure of compressed air supplied to a brake cylinder according to a pressure control signal; and a relay valve that outputs a brake cylinder pressure corresponding to compressed air supplied from the electromagnetic valve unit. The pressure control signal is generated by an electromagnetic-valve drive circuit in the brake control unit using a circuit power source in the brake control unit as a supply source, and is output to a solenoid of the electromagnetic valve unit. According to the brake control device with such a configuration, at a time of power running, the electromagnetic valve unit receives power source supply from the circuit power source to be excited and then a brake force is released. At a time of service braking, the power source supply to the electromagnetic valve unit is performed or stopped, so that a predetermined brake force is output. On the other hand, when an emergency brake command is output, the power source supply of the circuit power source to the electromagnetic valve unit is forcibly stopped, so that emergency braking can be generated.

Conventionally, for example, a brake control device described in Patent Document 1 mentioned below includes a brake control unit that outputs a pressure control signal corresponding to a brake command output from a brake command unit; a relay valve to which compressed air is supplied from an air storage; a brake cylinder that generates a brake force by the compressed air; and an electromagnetic valve unit that is mounted between the relay valve and the brake cylinder and controls a brake cylinder pressure in response to the brake command. In this brake control device, the electromagnetic valve unit is placed between the relay valve and the brake cylinder, so that the brake cylinder pressure is directly controlled by the electromagnetic valve unit. With this configuration, control errors in the relay valve can be reduced and the accuracy of brake control can be improved.

Patent Document 1: Japanese Patent Application Laid-open No. 2001-018784

JP 2003 063366 discloses a supply and exhaust valve operated to generate an emergency-brake pressure in a valve chest, using compressed air from a reservoir. The emergency-brake pressure is maintained by a holding unit, when the source voltage is eliminated. A control unit regulates the holding unit based on the air-spring pressure signal which is emitted according to the load of the vehicle.

### DISCLOSURE OF INVENTION

### PROBLEM TO BE SOLVED BY THE INVENTION

However, according to a conventional brake control device represented by the device described in Patent Document 1, when the brake control unit is broken or when some power source cards of the brake control device are broken and consequently the circuit power source supplied to the electromagnetic valve unit is lowered, brake control by a service brake cannot be performed and an emergency brake has to be used instead.

In addition, it has been difficult to satisfy the demand from railway companies for continuing brake control by a service brake as far as possible, only by brake control by an emergency brake.

The present invention has been made in view of the above problems, and an object of the present invention is to provide a brake control device that can perform brake control by a service brake even when a brake control unit is broken or a circuit power source for the brake control device is lowered.

### MEANS FOR SOLVING PROBLEM

To solve the above problems and achieve an object, a rail vehicle brake control device according to the present invention includes: a brake control unit that is mounted on each truck and generates a pressure control signal for controlling a brake cylinder pressure that acts on a brake cylinder based on a service brake command and an emergency brake command; an electromagnetic valve unit that includes a brake control valve that adjusts a pressure of compressed air supplied to the brake cylinder according to the pressure control signal; and a relay valve that outputs a brake cylinder pressure corresponding to the compressed air supplied from the electromagnetic valve unit, wherein the electromagnetic valve unit includes a release isolation magnet valve that adjusts a pressure of compressed air supplied to a primary side of the relay valve, and the release isolation magnet valve is configured to be operated by receiving power source supply from a brake control device mounted on another truck.

### EFFECT OF THE INVENTION

The brake control device according to the present invention includes an electromagnetic-valve drive circuit that has an emergency relay, a release isolation magnet valve control relay, and a circuit-power-source supply relay and a release isolation magnet electromagnetic valve. The release isolation magnet valve mounted on one truck is operated by receiving circuit-power-source supply from a circuit-power-source supply relay mounted on another truck. Therefore, even when a brake control unit is broken or a circuit power source of the brake control device is lowered, brake control can be performed by a service brake.

### BRIEF DESCRIPTION OF DRAWINGS

FIG. 1 is an example of a configuration of a brake control device according to a first embodiment.
FIG. 2 depicts an operation of a release isolation magnet valve when compressed air is supplied.
FIG. 3 depicts an operation of the release isolation magnet valve when compressed air is exhausted.
FIG. 4 is an example of a configuration of an electromagnetic-valve drive circuit.
FIG. 5 is an example of a configuration of an electromagnetic-valve drive circuit that controls a release isolation magnet valve of a first brake control device.
FIG. 6 is an example of a configuration of a brake control unit connected through a train information management system.
FIG. 7 is an example of a configuration of a brake control unit that includes a circuit-power-source switching unit composed of an OR circuit.
FIG. 8 is an example of a configuration of a brake control unit that includes a circuit-power-source switching unit composed of a switch circuit.

### EXPLANATIONS OF LETTERS OR NUMERALS

- [0011] 10: Service brake command
- 11: Brake network
- 12: Emergency brake command
- 13: Supply storage
- 14: Pneumatic spring pressure
- 15: Output pressure
- 16: Pressure control signal
- 17: Compressed air
- 18: Brake cylinder pressure
- 20: Brake control unit
- 20a: Brake control unit of first brake control device
- 20b: Brake control unit of second brake control device
- 21: Variable load valve
- 22: Brake control valve/slide control valve
- 23: Release isolation magnet valve (RIMV)
- 24: Relay valve
- 25, 26: Pressure sensor
- 27: Brake cylinder
- 28: Electromagnetic valve unit
- 30, 30a, 30b: Electromagnetic-valve drive circuit
- 31: Release isolation magnet valve power source line (RIMV power source line)
- 32: Emergency relay
- 33: Release isolation magnet valve control relay (RIMV control relay)
- 34: Circuit-power-source supply relay
- 40, 41: Circuit-power-source switching unit
- 42: Train information management system
- 100: Brake control device
- P1: Circuit power source (first circuit power source)
- P2: Circuit power source (second circuit power source)

### BEST MODE(S) FOR CARRYING OUT THE INVENTION

Exemplary embodiments of a brake control device according to the present invention will be explained below in detail with reference to the accompanying drawings. The present invention is not limited to the embodiments.

### First Embodiment

### (Configuration of brake control device)

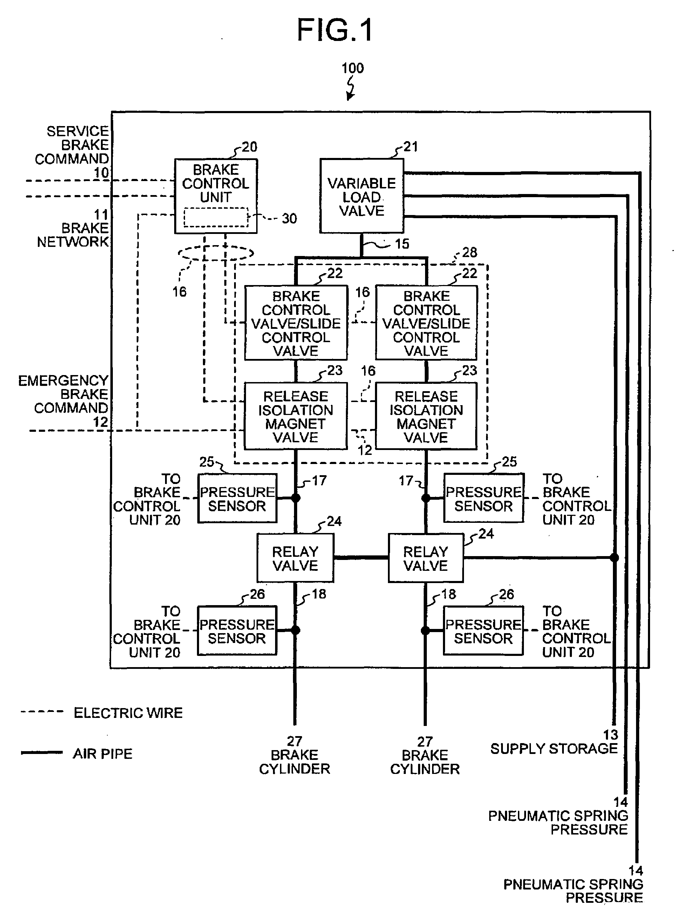

FIG. 1 is an example of a configuration of a brake control device according to a first embodiment. A brake control device 100 shown in FIG. 1 includes, as main constituent elements, a brake control unit 20, a variable load valve 21, a brake control valve/slide control valve 22, a release isolation magnet valve (RIMV) 23, a relay valve 24, a pressure sensor 25, and a pressure sensor 26.

The brake control unit 20 has an electromagnetic-valve drive circuit 30, and the electromagnetic-valve drive circuit 30 controls the brake control valve/slide control valve 22 and the RIMV 23. The brake control unit 20 is connected to the brake control device 100 mounted on another truck (not shown) through a brake network 11 described later. A service brake command 10 and an emergency brake command 12 output from a brake command unit (not shown) are input to the brake control unit 20. Further, a predetermined mode in which supply of compressed air and exhaust thereof are combined with each other for service brake control, slide control, and emergency brake outputting is defined in the brake control unit 20. Therefore, the electromagnetic-valve drive circuit 30 in the brake control unit 20 outputs a pressure control signal 16 for controlling a brake cylinder pressure 18 that acts on a brake cylinder 27 based on the service brake command 10, the emergency brake command, and the predetermined mode. Thus, the electromagnetic-valve drive circuit 30 controls the brake control valve/slide control valve 22 and the RIMV 23. The RIMV 23 controlled by the electromagnetic-valve drive circuit 30 is described later.

The variable load valve 21 is mounted on each truck and supplies an output pressure 15 corresponding to a pneumatic spring pressure 14, which is obtained by detecting a weight of a vehicle, to the brake control valve/slide control valve 22.

The brake control valve/slide control valve 22 adjusts the output pressure 15 described above based on the pressure control signal 16 output from the brake control unit 20. The brake control valve/slide control valve 22 generally includes a plurality of electromagnetic valves such as an apply magnet valve that supplies the supplied output pressure 15 to the brake cylinder 27 and a release magnet valve that adjusts the supplied output pressure 15.

The relay valve 24 is used for improving responsiveness of the brake cylinder pressure 18. Compressed air 17 output from the brake control valve/slide control valve 22 is input to a primary side of the relay valve 24, and a supply storage 13 that stores compressed air of a predetermined pressure is connected thereto. Therefore, the relay valve 24 can output the brake cylinder pressure 18 corresponding to the compressed air 17 described above.

The pressure sensor 25 detects the compressed air 17 input to the relay valve 24 and the pressure sensor 26 detects the brake cylinder pressure 18 output from the relay valve 24. The pressure sensors 25 and 26 then generate feedback commands (not shown) to feedback these feedback commands to the brake control unit 20. Therefore, the brake control unit 20 can perform accurate calculations of the pressure control signal 16.

The brake cylinder 27 presses a brake shoe (not shown) of a predetermined friction coefficient against each wheel according to an intensity of the brake cylinder pressure 18 to generate a desired brake force.

The RIMV 23 adjusts a pressure on the primary side of the relay valve 24 and exhausts the pressure put in the brake cylinder 27 after emergency braking is generated to release the brake force.

In FIG. 1, brake control valve/slide control valves 22, RIMVs 23, and relay valves 24 are shown symmetrically with respect to the variable load valve 21 for controlling individually brakes of respective axles. For example, the brake control valve/slide control valve 22, the RIMV 23, and the relay valve 24 on the left side of the variable load valve 21 adjust the brake cylinder pressure 18 of one brake cylinder 27. The brake control valve/slide control valve 22, the RIMV 23, and the relay valve 24 on the right side of the variable load valve 21 adjust the brake cylinder pressure 18 of the other brake cylinder 27. The brake control valve and the RIMV 23 that adjust the pressure of the compressed air 17 based on the service brake command 10 as well as the emergency brake command 12 are referred to as an electromagnetic valve unit 28.

### (Operation of release isolation magnet valve)

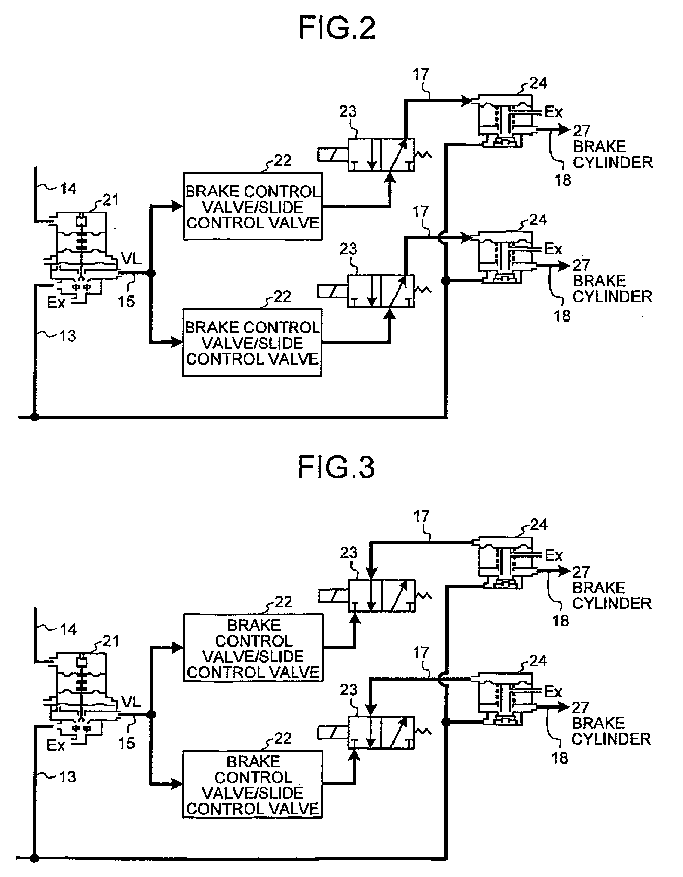

FIG. 2 depicts an operation of a release isolation magnet valve when compressed air is supplied. FIG. 3 depicts an operation of the release isolation magnet valve when compressed air is exhausted. With reference to FIGS. 2 and 3, solid lines between electromagnetic valves, that is, the variable load valve 21, the brake control valve/slide control valve 22, the RIMV 23, and the relay valve 24 represent a route through which compressed air passes through.

As shown in FIG. 2 or FIG. 3, the RIMV 23 is a three way valve that includes an inlet for compressed air output from the brake control valve/slide control valve 22, an outlet for sending the compressed air to the relay valve 24, and an exhaust port for exhausting the pressure put in the brake cylinder 27.

Further, the RIMV 23 is configured to be moved forward or backward in an extension direction of a spring in the RIMV 23 according to an urging force of the spring because of excitation or demagnetization of a solenoid of the RIMV 23 by a release isolation magnet valve control relay (RIMV control relay) 33 described later.

In FIG. 2, when the solenoid is demagnetized, an operating position of the RIMV 23 is held at a position where the compressed air 17 output from the brake control valve/slide control valve 22 passes toward the relay valve 24. In this case, the relay valve 24 supplies the brake cylinder pressure 18 to the brake cylinder 27. That is, a brake force is increased when power source supply from the circuit power source to the RIMV 23 is stopped.

On the other hand, when the solenoid is excited, the operating position of the RIMV 23 is held at a position where the compressed air 17 output from the relay valve 24 is externally exhausted as shown in FIG. 3. In this case, the relay valve 24 can exhaust the brake cylinder pressure 18 put in the brake cylinder 27. That is, the brake force is weakened when the power source supply from the circuit power source to the RIMV 23 is performed.

Because the variable load valve 21, the brake control valve/slide control valve 22, and the relay valve 24 shown in FIGS. 2 and 3 are well known, explanations of their operations will be omitted. The electromagnetic-valve drive circuit 30 that controls the RIMV 23 is described below.

### (Detailed configuration of brake control device)

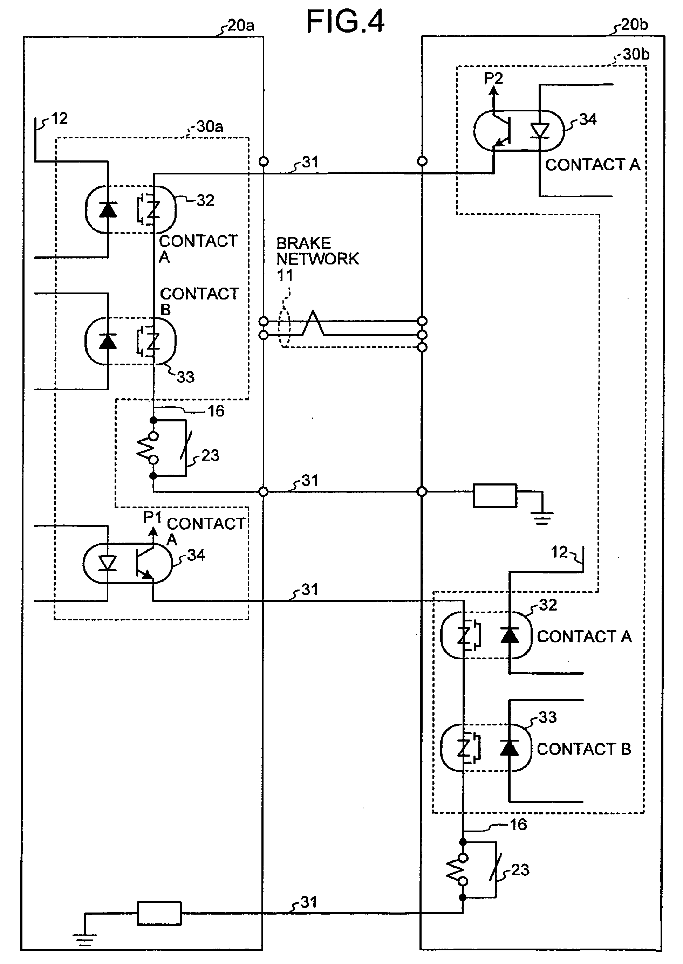

FIG. 4 is an example of a configuration of the electromagnetic-valve drive circuit. A brake control unit 20a and a brake control unit 20b shown in FIG. 4 represent the brake control unit 20 of the brake control device 100 mounted on each truck. For example, the brake control unit 20a is incorporated in the brake control device (hereinafter, "first brake control device") 100 mounted on one truck of a vehicle. The brake control unit 20b is incorporated in the brake control device (hereinafter, "second brake control device") 100 mounted on the other truck of the vehicle. Further, it is assumed that electromagnetic-valve drive circuits 30a and 30b are incorporated in the brake control units 20a and 20b, respectively.

### (Electromagnetic-valve drive circuit)

The electromagnetic-valve drive circuits 30a and 30b include, as main constituent elements, a circuit-power-source supply relay 34, an emergency relay 32, and the RIMV control relay 33. Further, circuit power sources P1 and P2 that are supplied to solenoids of the respective RIMV 23 through the relays are connected to the electromagnetic-valve drive circuits 30a and 30b, respectively. The circuit power source P1 or P2 is shown as the pressure control signal 16 for controlling the RIMV 23 in FIGS. 1 and 4.

### (Brake network)

The brake network 11 monitors a state of the brake control device 100 mounted on each truck. When the circuit power source P1 is lowered or the brake control unit 20a is broken in the first brake control device 100, the brake network 11 outputs information on the lowering in the circuit power source P1 and the failure of the brake control unit 20a to the second brake control device 100 as failure information. That is, the brake control device 100 mounted on each truck can transmit and receive the failure information of each brake control unit through the brake network 11. with reference to FIG. 4, while the brake network 11 uses a twist pair cable denoted by two solid lines and one dashed line, cables with a same function as that of the twist pair cable can be also used.

### (Release isolation magnet valve power source line)

A release isolation magnet valve power source line (hereinafter, "RIMV power source line") 31 is a power source cable that is laid between vehicles or in each vehicle and supplies a power source of the circuit power source P1 or P2 to the RIMV 23 between the brake control devices 100 mounted on the trucks. Because an output end of the circuit-power-source supply relay 34 described above is connected to the RIMV power source line 31, the power source of the circuit power source P2 for the second brake control device 100 can be supplied to the RIMV 23 mounted on the first brake control device 100.

### (Circuit-power-source supply relay)

The circuit-power-source supply relay 34 is composed of a contact A and operates this contact in response to a command (not shown) from the brake control unit 20a or the brake control unit 20b so that the power source of the circuit power source P1 or P2 is supplied to the RIMV 23 or the supply of the power source of the circuit power source P1 or P2 to the RIMV 23 is stopped.

### (RIMV control relay)

The RIMV control relay 33 is composed of a contact B and operates this contact in response to a command (not shown) from the brake control unit 20a or the brake control unit 20b so that the power source of the circuit power source P1 or P2 is supplied to the RIMV 23 or the supply of the power source of the circuit power source P1 or P2 to the RIMV 23 is stopped.

### (Emergency relay)

The emergency relay 32 is composed of the contact A and stops the supply of the power source of the circuit power source P1 or P2 to the RIMV 23 based on the emergency brake command 12. Specifically, when the emergency brake command 12 is not output, the emergency relay 32 is conducted (CLOSE). On the other hand, when the emergency brake command 12 is output, the emergency relay 32 is not conducted (OPEN). In the case that the emergency brake command 12 is output, even when the power source of the circuit power source P1 or P2 is supplied from the circuit-power-source supply relay 34 to the RIMV 23, the emergency relay 32 stops the supply of the power source of the circuit power source P1 or P2 to the RIMV 23. Consequently, the relay valve 24 can supply the brake cylinder pressure 18 corresponding to emergency braking to the brake cylinder 27.

When the circuit power source P1 is lowered or the brake control unit 20a is broken in the first brake control device 100, all electromagnetic valves in the electromagnetic-valve drive circuits 30a and 30b are demagnetized and the circuits become a brake mode.

However, even in the brake mode, the circuit-power-source supply relay 34 mounted on the second brake control device 100 can supply the power source of the circuit power source P2 to the RIMV 23 of the first brake control device 100. Therefore, the first brake control device 100 can release a brake.

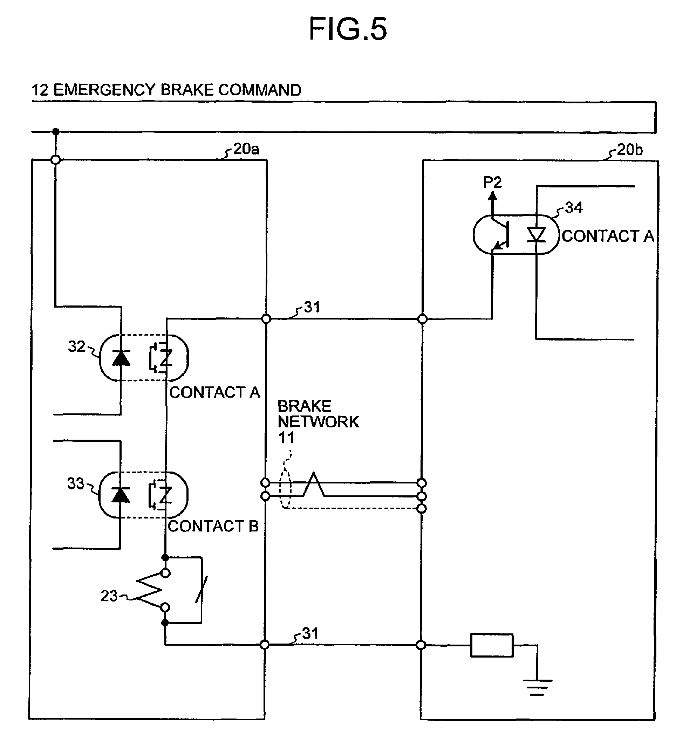

FIG. 5 is an example of a configuration of an electromagnetic-valve drive circuit that controls a release isolation magnet valve of the first brake control device. A configuration of the brake control units 20a and 20b when the RIMV 23 mounted on the first brake control device 100 is controlled by using the circuit-power-source supply relay 34 mounted on the second brake control device 100 is specifically shown in FIG. 5.

### (Operation during normal time)

An operation of the RIMV 23 when the circuit power source P1 is not lowered or the brake control unit 20a is not broken in the first brake control device 100 is described first. When the emergency brake command 12 is not output in a state that the RIMV control relay 33 is conducted, the emergency relay 32 is conducted (CLOSE). In such a state, when the circuit-power-source supply relay 34 is conducted (CLOSE) and the power source of the circuit power source P2 is supplied to the RIMV 23, the relay valve 24 exhausts the brake cylinder pressure 18.

On the other hand, when the emergency brake command 12 is output in a state that the RIMV control relay 33 is conducted, the emergency relay 32 is changed to be non-conductive (OPEN). In this case, the power source of the circuit power source P2 is not supplied to the RIMV 23 regardless of the state of the circuit-power-source supply relay 34. As a result, the relay valve 24 supplies the brake cylinder pressure 18 corresponding to emergency braking to the brake cylinder 27.

### (Operation during failure)

An operation when the circuit power source P1 is lowered or the brake control unit 20a is broken in the first brake control device 100 is described next. When the circuit power source P1 is lowered or the brake control unit 20a is broken in the first brake control device 100, all electromagnetic valves are demagnetized for safety operation and the RIMV 23 supplies the brake cylinder pressure 18. Even in such a state, when the circuit-power-source supply relay 34 mounted on the brake control unit 20b is excited and the contact of the circuit-power-source supply relay 34 is conducted (CLOSE), the power source of the circuit power source P2 is supplied to the RIMV 23. As a result, the relay valve 24 exhausts the brake cylinder pressure 18.

### (Operation during emergency braking)

Further, when the emergency brake command 12 is output in a state that the brake cylinder pressure 18 is exhausted, the emergency relay 32 is not conduced (OPEN). Accordingly, regardless of whether the circuit power source P1 is lowered or the brake control unit 20a is broken in the first brake control device 100, or of a state of the contact of the circuit-power-source supply relay 34, the supply of the power source of the circuit power source P2 to the RIMV 23 is stopped. As a result, the relay valve 24 can supply the brake cylinder pressure 18 corresponding to emergency braking to the brake cylinder 27. That is, the brake control device 100 mounted on each truck is configured to be always operated safely when the emergency brake command 12 is output.

As described above, according to the brake control device 100 of the first embodiment, the power source of the circuit power source P2 can be supplied to RIMV 23 of the first brake control device 100 or this power source supply can be stopped by using the circuit-power-source supply relay 34 of the second brake control device 100. That is, the brake control device 100 is configured to remotely control the RIMV 23 by the circuit-power-source supply relay 34. When the circuit power source P1 is lowered or the brake control unit 20a is broken in the first brake control device 100, brake control by the service brake command 10 as well as brake control by the emergency brake command 12 can be performed.

As explained above, the brake control device 100 according to the first embodiment includes the electromagnetic-valve drive circuit 30 that has the emergency relay 32, the RIMV control relay 33, and the circuit-power-source supply relay 34 as well as the release isolation magnet valve 23. The release isolation magnet valve 23 is operated by supplied the circuit power source P2 from the circuit-power-source supply relay 34 mounted on another truck. Therefore, even when the circuit power source P1 is lowered or the brake control unit 20a is broken in the first brake control device 100, the brake cylinder pressure 18 can be controlled. Therefore, even when the circuit power source P1 is lowered or the brake control unit 20a is broken in the first brake control device 100 and thus the device is in the brake mode, a brake can be released thereafter. With this configuration, undesired abrasion and heat generation of a brake shoe when a rail vehicle is pulled can be prevented and the rail vehicle can be transported in a stable manner. On top of that, when a brake force is insufficient, it can be increased. In addition, when the emergency brake command 12 is output, the rail vehicle can be stopped.

### Second Embodiment

The brake control device 100 according to the first embodiment is configured such that when the circuit power source P1 is lowered or the brake control unit 20a is broken in the first brake control device 100, the contact of the circuit-power-source supply relay 34 is open and braking is automatically generated. According to the brake control device 100 of a second embodiment, the logic of the circuit-power-source supply relay 34 is inverted, so that the brake cylinder pressure 18 is exhausted when the circuit power source P1 is lowered or the brake control unit 20a is broken in the first brake control device 100.

According to the brake control device 100 of the second embodiment, for example, when the circuit power source P1 is lowered or the brake control unit 20a is broken in the first brake control device 100, a contact of the circuit-power-source supply relay 34 is closed. Accordingly, generation of emergency braking despite a driver's intention can be prevented. The brake cylinder pressure 18 corresponding to emergency braking can be also supplied.

Further, when the emergency brake command 12 is output, the circuit power source P2 is not supplied to the RIMV 23 regardless of whether the circuit power source P1 is lowered or the brake control unit 20a is broken in the first brake control device 100. The RIMV 23 thus supplies the brake cylinder pressure 18 corresponding to emergency braking. That is, the brake control device 100 according to the second embodiment is configured to be always operated safely when the emergency brake command 12 is output, similarly to the brake control device 100 according to the first embodiment.

### Third Embodiment

The brake control device 100 according to the first embodiment is configured to transmit and receive failure information output from each brake control device 100 through the brake network 11 that monitors the state of each brake control device 100. The brake control device 100 according to a third embodiment is configured to transmit and receive failure information output from each brake control device 100 by an existing monitor device mounted on a rail vehicle, instead of the brake network 11.

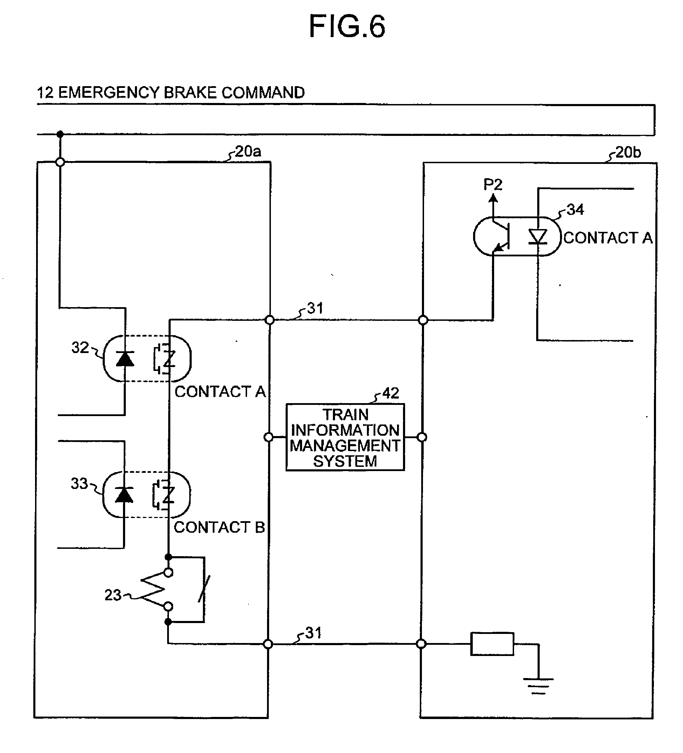

FIG. 6 is an example of a configuration of a brake control unit connected through a train information management system. While only one train information management system 42 is provided in FIG. 6, the train information management systems 42 mounted on respective vehicles are connected to each other by transmission paths (not shown) laid between the vehicles, so that the state of the brake control device 100 mounted on each truck is monitored.

When the brake control device 100 according to the third embodiment is used, the brake network 11 does not need to be established. Therefore, the cost of facilities for monitoring the state of the first brake control device 100 and the second brake control device 100, and the cost of operating the facilities can be suppressed.

### Fourth Embodiment

While the brake control device 100 according to the first embodiment utilizes the circuit power source P2 supplied from the second brake control device 100, the brake control device 100 according to a fourth embodiment is configured to be capable of also utilizing the circuit power source P1 of the first brake control device 100.

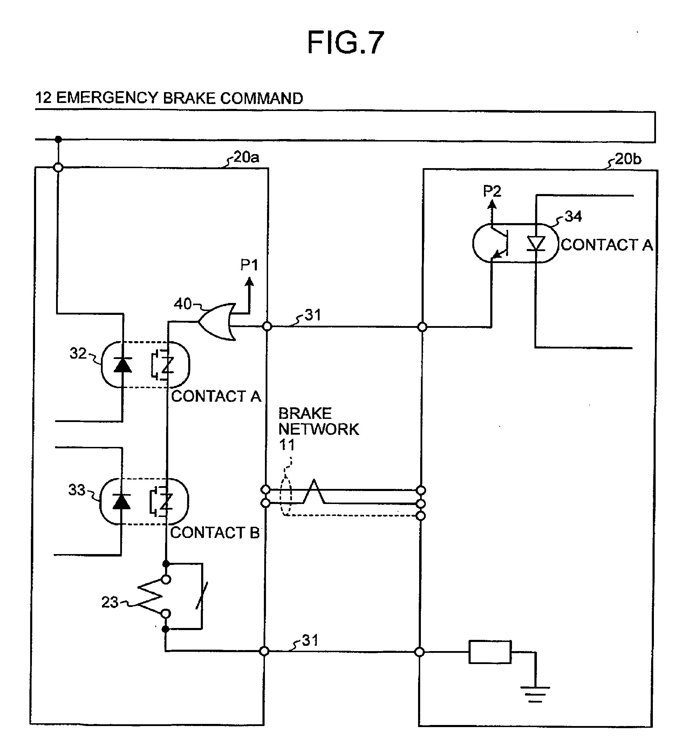

FIG. 7 is an example of a configuration of a brake control unit that includes a circuit-power-source switching unit constituted by an OR circuit. A circuit-power-source switching unit 40 shown in FIG. 7 is constituted by an OR circuit and can switch between the circuit power source P1 of the first brake control device 100 and the circuit power source P2 of the second brake control device 100.

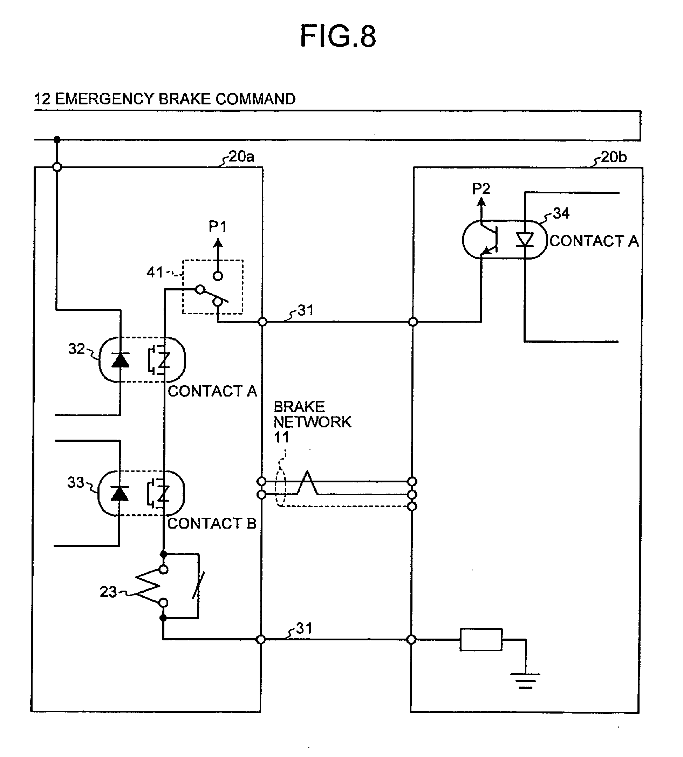

FIG. 8 is an example of a configuration of a brake control unit that includes a circuit-power-source switching unit constituted by a switch circuit. A circuit-power-source switching unit 41 shown in FIG. 8 is composed of a contact switch and can switch between the circuit power source P1 and the circuit power source P2, similarly to the circuit-power-source switching unit 40 shown in FIG. 7.

According to the brake control device 100 shown in FIGS. 7 and 8, when the circuit power source P1 is in a normal state, the power source of the circuit power source P1 is supplied to the RIMV 23 and the brake cylinder pressure 18 for the first brake control device 100 can be controlled. On the other hand, when the circuit power source P1 is lowered, the power source of the circuit power source P2 is supplied to the RIMV 23 and the brake cylinder pressure 18 can be controlled. Therefore, the reliability of the brake control can be further improved.

When the emergency brake command 12 is output, power source supply from the circuit power sources P1 and P2 to the RIMV 23 is stopped regardless of whether the circuit power source P1 is lowered or the brake control unit 20a is broken in the first brake control device 100. The relay valve 24 thus supplies the brake cylinder pressure 18 corresponding to emergency braking. That is, the brake control device 100 according to the fourth embodiment is configured to be always operated safely when the emergency brake command 12 is output, similarly to the brake control device 100 according to the first and second embodiments.

The circuit-power-source switching units 40 and 41 can switch between the circuit power source P1 and the circuit power source P2 in the brake control devices 100 mounted on different vehicles as well as between the circuit power source P1 and the circuit power source P2 in the respective brake control devices 100 mounted on trucks in a same vehicle.

The configuration of the brake control device 100 described in the present invention is only an example of the contents of the present invention. It is needless to mention that the configuration can be combined with other well-known techniques, and the present invention can be configured while modifying it without departing from the scope of the invention, such as omitting a part the configuration.

### INDUSTRIAL APPLICABILITY

As described above, the brake control device according to the present invention is useful for a rail vehicle brake control device that controls a brake cylinder pressure that acts on a brake cylinder based on a service brake command and an emergency brake command.

## Claims

1. A rail vehicle brake control device (100) comprising:
a brake control unit (20, 20a, 20b) that is mounted on each truck and generates a pressure control signal (16) for controlling a brake cylinder pressure that acts on a brake cylinder (27) based on a service brake command (10) and an emergency brake command (12);
an electromagnetic valve unit (28) that includes a brake control valve (22) that adjusts a pressure of compressed air supplied to the brake cylinder (27) according to the pressure control signal (16); and
a relay valve (24) that outputs a brake cylinder pressure corresponding to the compressed air supplied from the electromagnetic valve unit (28), wherein
the electromagnetic valve unit (28) includes a release isolation magnet valve (23) that adjusts a pressure of compressed air supplied to a primary side of the relay valve (24),
the brake control unit (20, 20a, 20b) mounted an own truck includes a circuit-power-source supply relay (34) that supplies, via a power source cable (31) that is laid between trucks or in each truck, a power source of a circuit power source (P1, P2) for a release isolation magnet valve (23) mounted on another truck, and
the release isolation magnet valve (23) mounted on the another truck operates by receiving power source supply from the brake control device (100) mounted on the own truck.

2. A rail vehicle brake control device (100) according to claim 1, wherein
when the brake control unit (20, 20a, 20b) mounted on the another truck is broken, the release isolation magnet valve (23) mounted on the another truck operates by receiving power source supply from the circuit-power-source supply relay (34) in the brake control unit (20, 20a, 20b) of the own truck.

3. A rail vehicle brake control device (100) according to claim 1 or 2, wherein
when a power source of a circuit power source (P1, P2) of the brake control device (100) mounted on the another truck is lowered, the release isolation magnet valve (23) mounted on the another truck operates by switching to power source supply from the brake control device (100) mounted on the own truck.

4. The rail vehicle brake control device (100) according to any one of claims 1 to 3, wherein
even when the brake cylinder pressure is exhausted by the release isolation magnet valve (23), a brake cylinder pressure corresponding to emergency braking can be supplied when an emergency brake command (12) is output.

5. The rail vehicle brake control device (100) according to any one of claims 1 to 3, wherein
failure information of the brake control unit (20, 20a, 20b) mounted on each truck can be transmitted and received through a train information management system that manages various pieces of vehicle information.

## Patentansprüche

1. Schienenfahrzeugbremssteuerungsvorrichtung (100), Folgendes umfassend:
eine Bremssteuereinheit (20, 20a, 20b), die an jedem Fahrgestell angebracht ist und ein Druckregelungssignal (16) zum Regeln eines Bremszylinderdrucks generiert, der auf Grundlage eines Betriebsbremsbefehls (10) und eines Notbremsbefehls (12) auf einen Bremszylinder (27) wirkt;
eine elektromagnetische Ventileinheit (28), die ein Bremssteuerventil (22) umfasst, das einen Druck von dem Bremszylinder (27) zugeführter Druckluft entsprechend dem Druckregelsignal (16) einstellt; und
ein Vorsteuerventil (24), das einen Bremszylinderdruck ausgibt, der der von der elektromagnetischen Ventileinheit (28) zugeführten Druckluft entspricht, wobei
die elektromagnetische Ventileinheit (28) ein Ablasssperrmagnetventil (23) umfasst, das einen Druck von einer Primärseite des Vorsteuerventils (24) zugeführter Druckluft einstellt,
wobei die an einem eigenen Fahrgestell angebrachte Bremssteuereinheit (20, 20a, 20b) ein Schaltkreisenergiequellenzufuhrrelais (34), das über ein Energiequellenkabel (31), das zwischen Fahrgestellen oder in jedem Fahrgestell verlegt ist, eine Energiequelle einer Schaltkreisenergiequelle (P1, P2) für ein an einem anderen Fahrgestell angebrachtes Ablasssperrmagnetventil (23) versorgt, und
wobei das am anderen Fahrgestell angebrachte Ablasssperrmagnetventil (23) arbeitet, indem es eine Energiequellenversorgung aus der am eigenen Fahrgestell angebrachten Bremssteuervorrichtung (100) erhält.

2. Schienenfahrzeugbremssteuerungsvorrichtung (100) nach Anspruch 1, wobei, wenn die am anderen Fahrgestell angebrachte Bremssteuereinheit (20, 20a, 20b) ausfällt, das am anderen Fahrgestell angebrachte Ablasssperrmagnetventil (23) arbeitet, indem es eine Energiequellenversorgung aus dem Schaltkreisenergiequellenzufuhrrelais (34) in der Bremssteuereinheit (20, 20a, 20b) des eigenen Fahrgestells erhält.

3. Schienenfahrzeugbremssteuerungsvorrichtung (100) nach Anspruch 1 oder 2, wobei,
wenn eine Energiequelle einer Schaltkreisenergiequelle (P1, P2) der am anderen Fahrgestell angebrachten Bremssteuervorrichtung (100) schwächer wird, das am anderen Fahrgestell angebrachte Ablasssperrmagnetventil (23) arbeitet, indem es von der am eigenen Fahrgestell angebrachten Bremssteuervorrichtung (100) zur Energiequellenzufuhr umschaltet.

4. Schienenfahrzeugbremssteuerungsvorrichtung (100) nach einem der Ansprüche 1 bis 3, wobei,
selbst wenn der Bremszylinderdruck durch das Ablasssperrmagnetventil (23) erschöpft ist, ein der Notbremsung entsprechender Bremszylinderdruck geliefert werden kann, wenn ein Notbremsbefehl (12) ausgegeben wird.

5. Schienenfahrzeugbremssteuerungsvorrichtung (100) nach einem der Ansprüche 1 bis 3, wobei
Ausfallinformation der am jedem Fahrgestell angebrachten Bremssteuereinheit (20, 20a, 20b) über ein Zuginformationsverwaltungssystem übertragen und empfangen werden kann, das verschiedene Fahrzeuginformationselemente verwaltet.

## Revendications

1. Dispositif de commande de frein de véhicule sur rails (100) comprenant :
une unité de commande de frein (20, 20a, 20b) qui est montée sur chaque voiture et génère un signal de commande de pression (16) pour commander une pression de cylindre de frein qui agit sur un cylindre de frein (27) en fonction d'une instruction de frein de service (10) et d'une instruction de frein d'urgence (12) ;
une unité de valves électromagnétiques (28) qui inclut une valve de commande de frein (22) qui règle une pression d'air comprimé fourni au cylindre de frein (27) en fonction du signal de commande de pression (16) ; et
une valve relais (24) qui sort une pression de cylindre de frein correspondant à l'air comprimé fourni depuis l'unité de valves électromagnétiques (28), où
l'unité de valves électromagnétiques (28) inclut une valve magnétique d'isolation de desserrage (23) qui règle une pression d'air comprimé fourni à un côté primaire de la valve relais (24),
l'unité de commande de frein (20, 20a, 20b) montée sur sa propre voiture inclut un relais d'alimentation de source d'énergie de circuit (34) qui alimente, via un câble de source d'énergie (31) qui est posé entre des voitures ou dans chaque voiture, une source d'énergie d'une source d'énergie de circuit (P1, P2) pour une valve magnétique d'isolation de desserrage (23) montée sur une autre voiture, et
la valve magnétique d'isolation de desserrage (23) montée sur l'autre voiture fonctionne en recevant une alimentation de source d'énergie provenant du dispositif de commande de frein (100) monté sur sa propre voiture.

2. Dispositif de commande de frein de véhicule sur rails (100) selon la revendication 1, où
lorsque l'unité de commande de frein (20, 20a, 20b) montée sur l'autre voiture est cassée, la valve magnétique d'isolation de desserrage (23) montée sur l'autre voiture fonctionne en recevant une alimentation de source d'énergie provenant du relais d'alimentation de source d'énergie de circuit (34) dans l'unité de commande de frein (20, 20a, 20b) de sa propre voiture.

3. Dispositif de commande de frein de véhicule sur rails (100) selon la revendication 1 ou 2, où
lorsqu'une source d'énergie d'une source d'énergie de circuit (P1, P2) du dispositif de commande de frein (100) monté sur l'autre voiture est baissée, la valve magnétique d'isolation de desserrage (23) montée sur l'autre voiture fonctionne en commutant vers l'alimentation de source d'énergie provenant du dispositif de commande de frein (100) monté sur sa propre voiture.

4. Le dispositif de commande de frein de véhicule sur rails (100) selon l'une quelconque des revendications 1 à 3, où
même lorsque la pression de cylindre de frein s'est échappée par la valve magnétique d'isolation de desserrage (23), une pression de cylindre de frein correspondant à un freinage d'urgence peut être fournie lorsqu'une instruction de frein d'urgence (12) est sortie.

5. Le dispositif de commande de frein de véhicule sur rails (100) selon l'une quelconque des revendications 1 à 3, où
une information de défaut de l'unité de commande de frein (20, 20a, 20b) montée sur chaque voiture peut être transmise et reçue via un système de gestion d'information de train qui gère divers éléments d'information de véhicule.
